# EUROPEAN PATENT SPECIFICATION

(11) **EP 0 648 589 B1**
(45) Date of publication and mention of the grant of the patent: **08.09.1999**
(21) Application number: 94116415.4
(22) Date of filing: 18.10.1994
(51) Int. Cl.: B29C 45/16, E05B 19/04

(54) **Process for producing a key, in particular a vehicle ignition key, and key produced thereby**
Verfahren zur Herstellung eines Schlüssels, insbesondere eines Zündschlüssels eines Kraftfahrzeuges und so hergestellter Schlüssel
Procédé de fabrication d'une clé, notamment une clé de contact d'un véhicule, et clé ainsi fabriquée

(30) Priority: 19.10.1993 IT TO930776; 25.03.1994 IT TO940228
(43) Date of publication of application: 19.04.1995
(73) Proprietor: TRW SIPEA S.p.A., 10042 Nichelino (IT)
(72) Inventor: Graglia, Daniele, I-10026 Santena (IT)
(74) Representative: Cerbaro, Elena, Dr.

(56) References cited:
- EP-A- 0 401 541
- EP-A- 0 559 160
- US-A- 3 427 833
- US-A- 3 786 659
- PATENT ABSTRACTS OF JAPAN vol. 10, no. 51 (M-457) (2108) 28 February 1986 & JP-A-60 199 622 (INOUE EMU TEE PII)

## Description

The present invention relates to a process for producing a key, in particular a vehicle ignition key.

Ignition keys are normally produced by clanking an elongated metal insert constituting the active portion of the key, and co-molding plastic material on to one end of the insert to form a grip. Firm adhesion between the two parts is achieved by means of a hole in the insert, which, when filled with the plastic material constituting the grip, forms a mechanical fastener.

EP-A-401541 and US-A-3427833 disclose a key, in particular a vehicle ignition key, according to the above description.

JP-A-60-199622 discloses a production process comprising an initial step of forming a metal insert, a step for co-moulding a first plastic material onto the metal insert and a step for covering at least part of the first plastic material.

The above processes present several drawbacks.

In particular, molding is inevitably accompanied by shrinkage resulting in irregular surface finish of the grip and hence in poor quality of the finished product in terms of both size and appearance. In addition to the above technical drawback, single-material keys produced using known methods are limited to a very narrow range of materials which must be both mechanically strong and of pleasing appearance.

It is an object of the present invention to provide a process for producing a key, in particular a vehicle ignition key, designed to overcome the drawbacks typically associated with known processes.

According to the present invention, there is provided a process for producing a key, in particular a vehicle ignition key, as defined in claim 1.

A preferred non-limiting embodiment of the present invention will be described by way of example with reference to the accompanying drawings, in which:
Figure 1 shows a partial front view of a key formed using a process not subject-matter of the present invention and described for a better comprehension thereof;
Figure 2 shows a section along line II-II in Figure 1;
Figures 3a to 3f show successive steps in the formation of the Figure 1 key;
Figure 4 shows a partial front view of a key formed using the process according to the present invention;
Figure 5 shows a section along line V-V in Figure 4;
Figures 6a to 6c show successive steps in the formation of the Figure 4 key.

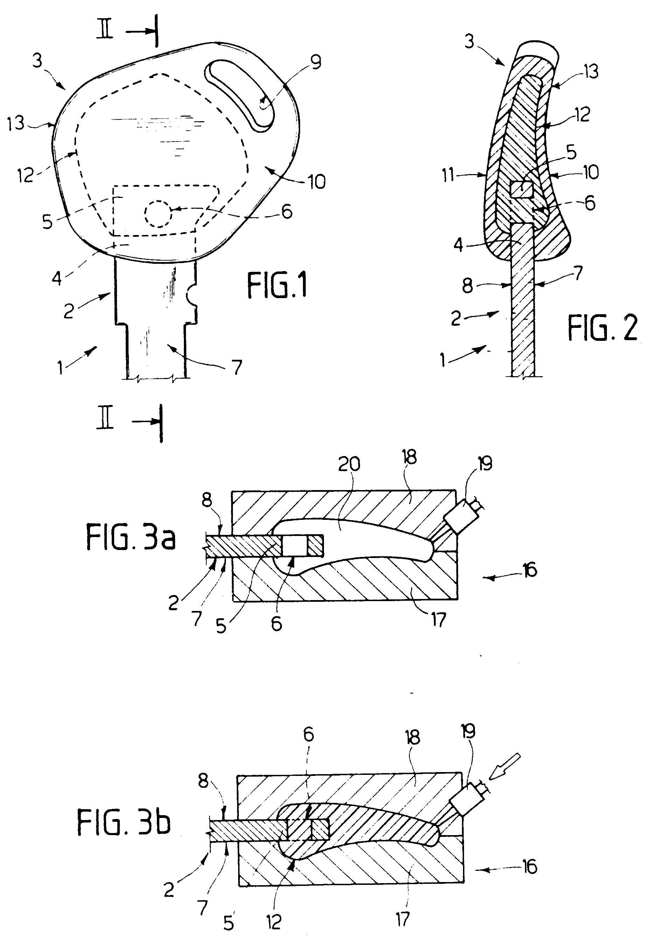

Number 1 in Figure 1 indicates a key formed using a process not subject-matter of the present invention and described for a better comprehension thereof.

Key 1 substantially comprises an elongated metal insert 2 (shown partially); and a grip 3 at one end of metal insert 2.

More specifically, metal insert 2 - which constitutes the active portion of the key and, being of known type, is not described in detail - is substantially in the form of an elongated rectangular blade, an end portion 4 (Figure 1) of which presents a trapezoidal end 5. As shown more clearly in Figure 2, trapezoidal end 5 presents a through hole 6 extending through metal insert 2 from a first face 7 to the opposite face 8 of the insert.

Viewed as in Figure 1, grip 3 is substantially in the form of an irregular pentagon with rounded vertices, and presents, close to and extending parallel to one side, an elongated through opening 9 extending between a front face 10 and a rear face 11, and by which key 1 is attached to a key ring (not shown).

With reference to Figure 2, grip 3 comprises an inner core 12, and an outer covering 13 defining the form of grip 3.

Core 12 presents a substantially trapezoidal cross section, and is made of a first plastic material in which end 5 of end portion 4 is embedded.

Core 12 and metal insert 2 are integral with each other and form one body, by virtue of a portion of the first plastic material also filling through hole 6 and so forming a firm mechanical fastener.

Outer covering 13, which presents a cross section in the form of a trapezium with rounded corners, is made of a second plastic material covering the whole of core 12 and the portion of end portion 4 of metal insert 2 projecting from core 12. More specifically, covering 13 is secured stably to core 12 by chemical bonds and, as a consequence of the above arrangement, is also integral with metal insert 2.

The process for producing key 1 as described above is shown in Figures 3a to 3f.

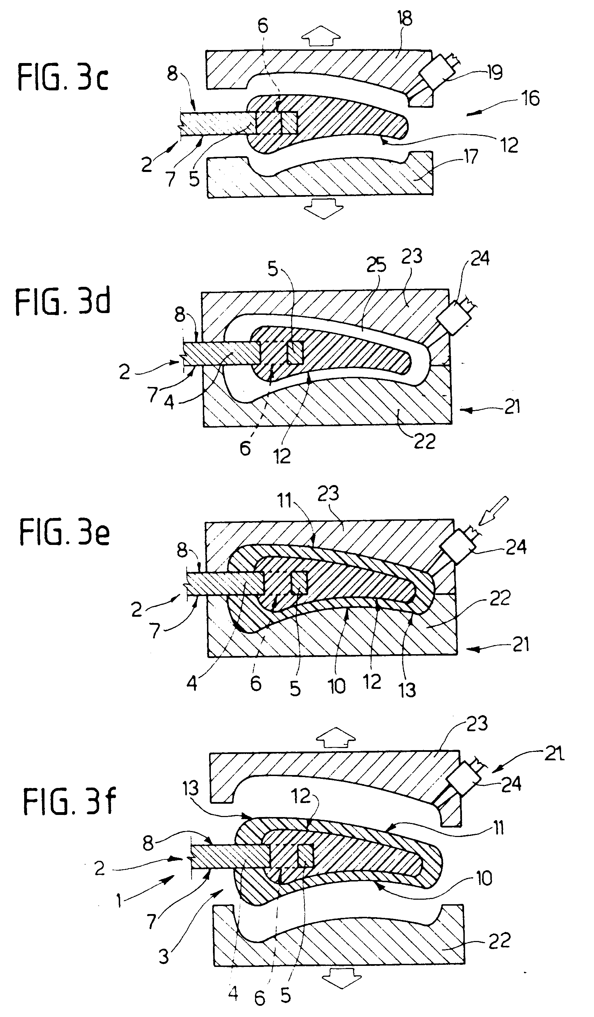

Number 16 in Figures 3a, 3b, 3c indicates a first mold composed of a first lower half mold 17, and a first upper half mold 18 fitted inside with a first nozzle 19. When mated, first lower and upper half molds 17 and 18 define a first cavity 20 presenting a negative outer impression of core 12 of grip 3.

Number 21 in Figures 3d, 3e, 3f indicates a second mold composed of a second lower half mold 22, and a second upper half mold 23 fitted inside with a second nozzle 24. When mated, second lower and upper half molds 22 and 23 define a second cavity 25 greater in volume than first cavity 20 and presenting a negative outer impression of covering 13 of grip 3.

Leaving aside the known step for forming metal insert 2, from the operating standpoint, the process initially comprises (Figure 3a) inserting metal insert 2 between first lower and upper half molds 17 and 18, which are then closed to define first cavity 20 of first mold 16. More specifically, metal insert 2 is so positioned that only end 5 is located inside cavity 20. The first molten plastic material (Figure 3b) is then pressure injected by means of first nozzle 19 so as to fill cavity 20 and penetrate inside through hole 6, and sets to form core 12. When the first plastic material has set, first mold 16 is opened (Figure 3c) and core 12 integral with metal insert 2 is removed. Core 12 integral with metal insert 2 is then inserted (Figure 3d) between second lower and upper half molds 22 and 23 which are closed to define second cavity 25 of second mold 21. More specifically, core 12 is so positioned as to be detached from the inside of second lower and upper half molds 22 and 23. The second molten plastic material (Figure 3e) is then pressure injected by means of second nozzle 24 so as to fill the gap between core 12 and the inner walls of second cavity 25. When the second plastic material has set, second mold 21 is opened (Figure 3f), and key 1 complete with the finished grip 3 is removed.

The advantages of the process described above are as follows.

Firstly, a second co-molding step provides for masking with an outer covering any surface flaws produced in the first co-molding step, and so eliminating any unsightly effects of material shrinkage, while at the same time enhancing the technical result in terms of the dimensional quality of the finished product.

Secondly, using two separate materials, one for ensuring the required mechanical strength and the other for defining a suitable outer surface, provides for more efficient, low-cost manufacture.

Indeed, considerable saving is afforded by using a first low-cost plastic material for the mechanically resisting structure of the key, and a second better quality plastic material for defining the grip.

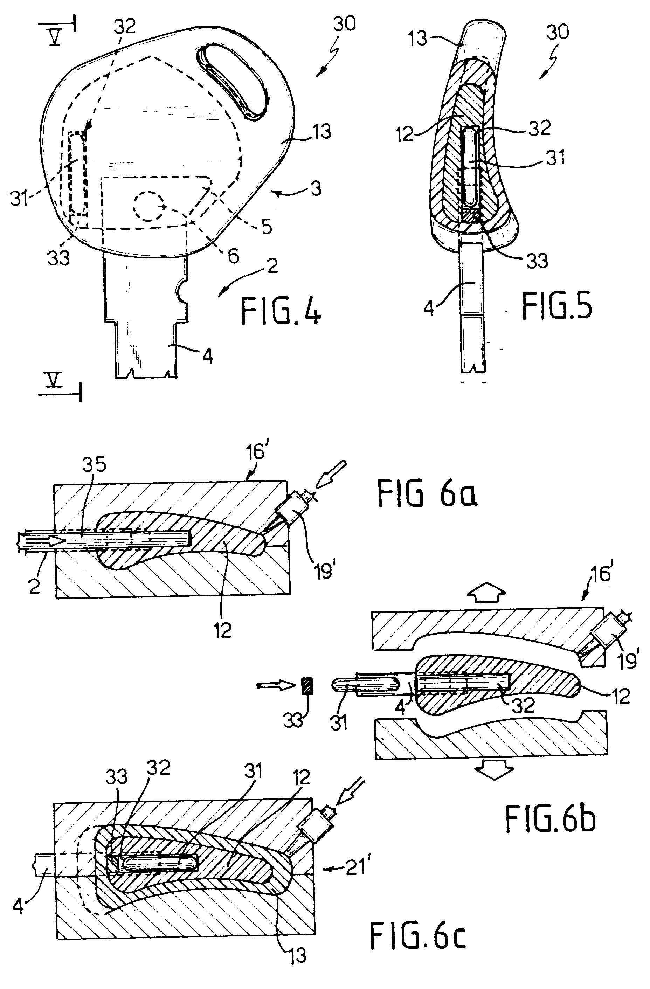

Figure 4 shows a key 30 formed using the process according to the present invention, and housing an electronic component 31 which is inserted after molding core 12 and is sealed externally by outer covering 13.

Electronic component 31 preferably constitutes a transponder and forms part of a multicomponent antitheft system, for receiving and transmitting electric signals and exchanging information with other parts of the system. For example, component 31 may constitute the auxiliary unit of the system described in Italian Patent Application n. 67649-A/88 filed on 11.7.88 by Turatti Mario and entitled: "Electronic identification system, particularly for steering lock and door lock control and other automotive applications."

Component 31 is housed inside an elongated, dead seat 32 formed in core 12 of the key and sealed at the open end by a cover element 33, e.g. of silicon or thermosetting resin. The rest of key 30 is identical to key 1 in Figure 1, with core 12 made of a different plastic material from cover 13, and therefore requires no further description.

The process for producing key 30 differs from that described above relative to key 1 only as regards a number of steps to which the following description is limited.

Firstly, metal insert 2 is inserted inside a first mold indicated 16' in Figures 6a, 6b and similar to first mold 16 in Figures 3a-3c, except that it presents a retractable punch 35 of the same shape as seat 32 to be formed. The first molten plastic material is then pressure injected by means of a first nozzle 19'.

When the first plastic material has set, punch 35 is withdrawn and mold 16' opened as shown in Figure 6b; component 31 (Figure 6b) is inserted inside seat 32 formed by punch 35; and the end of seat 32 is closed by cover element 33. For the sake of simplicity, cover element 33 is shown in the form of a premolded body in Figure 6b, whereas, in general, it may be formed as needed by injecting a small amount of resin to seal the end of seat 32.

The next steps in the process are the same as those already described: insertion inside a second mold 21', injection of the second molten plastic material (Figure 6c), and removal from the mold.

In addition to the advantages listed in connection with the process described above with reference to key 1, the process according to the present invention provides for troublefree insertion of an electric or electronic component with substantially no increase in manufacturing cost; and the component so incorporated is protected against impact and external agents, and by an airtight seal against damp and liquids.

Moreover, once the outer covering is molded, the component so incorporated is protected against tampering by the owner or any unauthorized user of the key, thus providing for a high degree of safety.

Incorporating the component inside the core and subsequently molding the outer covering in no way affects the appearance of the key which externally is identical to those with no inserts or electronic components.

Finally, by incorporating the electronic component inside the core and insulating it externally by sealing the insertion opening, there is no limit to the materials or temperatures that may be employed in the second co-molding step.

Clearly, changes may be made to the process and key as described and illustrated herein without, however, departing from the scope of the present invention.

In particular, the process may comprise a number of covering steps for applying total or even only partial cover layers; the core of the key may be provided with a hood or similar covering of any type; and, in addition to component 31, other elements may be inserted inside the core using the same molding technique.

## Claims

1. A process for producing a key (1), in particular a vehicle ignition key, comprising the steps of forming a metal insert (2), co-molding a first plastic material on to said metal insert (2) and covering at least part of said first plastic material, characterized in that said step for co-molding a first plastic material comprises the step of forming a hollow seat (32) in said first plastic material; and in that said process further comprises the steps of inserting an insert (31) inside said hollow seat (32).

2. A process for producing a key (1) as claimed in Claim 1, characterized in that said covering step comprises a step for co-molding a second plastic material.

3. A process for producing a key (1) as claimed in Claim 1 or 2, characterized in that said step for co-molding a first plastic material comprises the steps of:
- inserting an end portion (4) of said metal insert (2) inside a first cavity (20) of a first mold (16);
- pressure injecting molten said first plastic material into said first cavity (20) to form the core (12) of said key (1);
- setting said first plastic material; and
- removing said core (12) from said first cavity (20).

4. A process for producing a key (1) as claimed in Claims 2 and 3, characterized in that said step for co-molding a second plastic material comprises the steps of:
- inserting said core (12) inside a second cavity (25) of a second mold (21);
- pressure injecting molten said second plastic material into said second cavity (25);
- setting said second plastic material; and
- removing the finished said key (1) from said second cavity (25).

5. A process as claimed in one of the foregoing Claims, characterized in that, after said step of inserting said insert (31), and before said covering step, a step is performed of forming a closing element (33) of said seat (32) to insulate said insert (31) from said covering.

6. A process as claimed in Claim 5, characterized in that said closing element (33) is formed by injecting resin.

7. A key (1), in particular a vehicle ignition key, comprising a metal insert (2) and a grip (3); characterized in that said grip (3) comprises an inner core (12) co-molded on to said metal insert (2), made of a first plastic material, and a covering (13) for said core (12), made of a second plastic material, and in that said core (12) has a seat (32) housing an insert (31).

8. A key (1) as claimed in Claim 7, characterized in that said metal insert (2) comprises mechanical fastening means (6) for retaining said first plastic material.

9. A key (1) as claimed in Claim 8, characterized in that said mechanical fastening means (6) comprise at least one through hole formed in said metal insert (2).

10. A key (1) as claimed in any of Claims 7-9, characterized in that said grip (3) has substantially the form of an irregular pentagon with rounded vertices, and presents an elongated opening (9) close to and extending parallel to one side.

11. A key as claimed in any of claims 7-10, characterized in that said insert (31) is an electronic component of an antitheft system.

12. A key as claimed in any of claims 7-11, characterized in that it comprises a closing element (33) for insulating said insert (31) from said covering (13).

13. A key as claimed in Claim 12, characterized in that said closing element (33) is made of resin.

## Patentansprüche

1. Verfahren zur Herstellung eines Schlüssels (1), insbesondere eines Zündschlüssels eines Kraftfahrzeuges, umfassend die Schritte eines Ausbildens eines Metalleinsatzteils (2), eines gemeinsamen Formens eines ersten Kunststoffmaterials an das Metalleinsatzteil (2) und eines Abdeckens von wenigstens einem Teil des ersten Kunststoffmaterials, dadurch gekennzeichnet, daß der Schritt des gemeinsamen Formens eines ersten Kunststoffmaterials den Schritt eines Ausbildens einer hohlen Aufnahme bzw. eines hohlen Sitzes (32) in dem ersten Kunststoffmaterial umfaßt und daß das Verfahren weiters die Schritte eines Einbringens eines Einsatzteils (31) in die hohle Aufnahme (32) umfaßt.

2. Verfahren zur Herstellung eines Schlüssels (1) nach Anspruch 1, dadurch gekennzeichnet, daß der Abdeckschritt einen Schritt für ein gemeinsames Formen eines zweiten Kunststoffmaterials umfaßt.

3. Verfahren zur Herstellung eines Schlüssels (1) nach AnSpruch 1 oder 2, dadurch gekennzeichnet, daß der Schritt des gemeinsamen Formens eines ersten Kunststoffmaterials die Schritte umfaßt:
- Einfügen eines Endbereichs (4) des Metalleinsatzteils (2) in eine erste Ausnehmung (20) einer ersten Form (16);
- Druckspritzgießen des ersten Kunststoffmaterials in die erste Ausnehmung (20), um den Kern bzw. das Innenteil (12) des Schlüssels (1) auszubilden;
- Härten bzw. Aushärten des ersten Kunststoffmaterials; und
- Entfernen des Kerns bzw. Innenteils (12) aus der ersten Ausnehmung (20).

4. Verfahren zur Herstellung eines Schlüssels (1) nach AnSprüchen 2 und 3, dadurch gekennzeichnet, daß der Schritt des gemeinsamen Formens eines zweiten Kunststoffmaterials die Schritte umfaßt:
- Einfügen dieses Kerns bzw. Innenteils (12) in eine zweite Ausnehmung (25) einer zweiten Form (21);
- Druckspritzgießen des zweiten Kunststoffmaterials in die zweite Ausnehmung (25);
- Härten bzw. Aushärten des zweiten Kunststoffmaterials; und
- Entfernen des fertiggestellten Schlüssels (1) aus der zweiten Ausnehmung (25).

5. Verfahren nach einem der vorangehenden Ansprüche, dadurch gekennzeichnet, daß nach dem Schritt des Einfügens des Einsatzteils (31) und vor dem Abdeckschritt ein Schritt einer Ausbildung eines Schließelements (33) der Aufnahme (32), um das Einsatzteil (31) von der Abdeckung zu isolieren, durchgeführt wird.

6. Verfahren nach Anspruch 5, dadurch gekennzeichnet, daß das Schließelement (33) durch Einspritzen von Harz ausgebildet wird.

7. Schlüssel (1), insbesondere Zündschlüssel eines Kraftfahrzeugs, umfassend ein Metalleinsatzteil (2) und einen Griff (3), dadurch gekennzeichnet, daR der Griff (3) einen inneren Kern bzw. ein Innenteil (12), der (das), aus einem ersten Kunststoffmaterial gefertigt, an das Metalleinsatzteil (2) angeformt ist, und eine aus einem zweiten Kunststoffmaterial gefertigte Abdeckung (13) für diesen Kern (12) umfaßt und daß der Kern (12) einen Sitz bzw. eine Aufnahme (32) aufweist, der (die) ein Einsatzteil (31) aufnimmt.

8. Schlüssel (1) nach Anspruch 7, dadurch gekennzeichnet, daß das Metalleinsatzteil (2) mechanische Festlegungseinrichtungen (6) zum Zurückhalten des ersten Kunststoffmaterials umfaßt.

9. Schlüssel (1) nach Anspruch 8, dadurch gekennzeichnet, daß die mechanischen Festlegungselemente (6) wenigstens ein durchgehendes Loch, welches in dem metallischen Einsatzteil (2) ausgebildet ist, umfassen.

10. Schlüssel (1) nach einem der Ansprüche 7 bis 9, dadurch gekennzeichnet, daß der Griff (3) im wesentlichen die Form eines unregelmäßigen Fünfecks mit abgerundeten Spitzen aufweist und eine längliche Öffnung (9) nahe an einer Seite und parallel zu dieser aufweist.

11. Schlüssel (1) nach einem der Ansprüche 7 bis 10, dadurch gekennzeichnet, daß das Einsatzteil (31) eine elektronische Komponente eines Diebstahlsicherungssystems ist.

12. Schlüssel (1) nach einem der Ansprüche 7 bis 11, dadurch gekennzeichnet, daß er ein Schließelement (33) zum Isolieren des Einsatzteils (31) von der Abdeckung (13) umfaßt.

13. Schlüssel (1) nach Anspruch 12, dadurch gekennzeichnet, daß das Schließelement (33) aus Harz gefertigt ist.

## Revendications

1. Procédé de fabrication d'une clé (1), notamment d'une clé de contact d'un véhicule, comprenant les étapes consistant à former un panneton métallique (2), à mouler solidairement une première matière plastique sur ledit panneton métallique (2) et à recouvrir au moins une partie de ladite première matière plastique, caractérisé en ce que ladite étape de moulage solidaire d'une première matière plastique comprend l'étape consistant à former un logement creux (32) dans ladite première matière plastique; et en ce que ledit procédé comprend en outre les étapes consistant à insérer une enclave (31) à l'intérieur dudit logement creux (32).

2. Procédé de fabrication d'une clé (1) selon la revendication 1, caractérisé en ce que ladite étape de recouvrement comprend une étape consistant à mouler solidairement une deuxième matière plastique.

3. Procédé de fabrication d'une clé (1) selon la revendication 1 ou 2, caractérisé en ce que ladite étape de moulage solidaire d'une première matière plastique comprend les étapes consistant à:
- insérer une partie d'extrémité (4) dudit panneton métallique (2) à l'intérieur d'une première cavité (20) d'un premier moule (16);
- injecter sous pression ladite première matière plastique fondue dans ladite première cavité (20) de façon à former le noyau (12) de ladite clé (1);
- laisser durcir ladite première matière plastique; et
- retirer ledit noyau (12) de ladite première cavité (20).

4. Procédé de fabrication d'une clé (1) selon les revendications 2 et 3, caractérisé en ce que ladite étape de moulage solidaire d'une deuxième matière plastique comprend les étapes consistant à:
- insérer ledit noyau (12) à l'intérieur d'une deuxième cavité (25) d'un deuxième moule (21);
- injecter sous pression ladite deuxième matière plastique fondue dans ladite deuxième cavité (25);
- laisser durcir ladite deuxième matière plastique; et
- retirer ladite clé achevée (1) de ladite deuxième cavité (25).

5. Procédé selon l'une quelconque des précédentes revendications, caractérisé en ce que, après ladite étape consistant à insérer ladite enclave (31) et avant ladite étape de recouvrement, une étape est exécutée consistant à former un élément de fermeture (33) dudit logement (32) de façon à isoler ladite enclave (31) dudit revêtement.

6. Procédé selon la revendication 5, caractérisé en ce que ledit élément de fermeture (33) est formé en injectant de la résine.

7. Clé (1), notamment clé de contact d'un véhicule, comprenant un panneton métallique (2) et une prise (3); caractérisée en ce que ladite prise (3) comprend un noyau intérieur (12) moulé solidairement sur ledit panneton métallique (2), fabriqué en une première matière plastique, et un revêtement (13) dudit noyau (12), fabriqué en une deuxième matière plastique, et en ce que ledit noyau (12) a un logement (32) recevant une enclave (31).

8. Clé (1) selon la revendication 7, caractérisée en ce que ledit panneton métallique (2) comprend des moyens de fixation mécanique (6) pour retenir ladite première matière plastique.

9. Clé (1) selon la revendication 8, caractérisée en ce que lesdits moyens de fixation mécanique (6) comprennent au moins un trou traversant formé dans ledit panneton métallique (2).

10. Clé (1) selon l'une quelconque des revendications 7 à 9, caractérisée en ce que ladite prise (3) a sensiblement la forme d'un pentagone irrégulier à sommets arrondis et présente une ouverture allongée (9) à proximité d'un côté et s'étendant parallèlement à celui-ci.

11. Clé selon l'une quelconque des revendications 7 à 10, caractérisée en ce que ladite enclave (31) est un composant électronique d'un système antivol.

12. Clé selon l'une quelconque des revendications 7 à 11, caractérisée en ce qu'elle comprend un élément de fermeture (33) pour isoler ladite enclave (31) dudit revêtement (13).

13. Clé selon la revendication 12, caractérisée en ce que ledit élément de fermeture (33) est fabriqué en résine.
